# FASCICULE DE BREVET EUROPEEN

(11) **EP 0 919 813 B1**
(45) Date de publication et mention de la délivrance du brevet: **02.05.2003**
(21) Numéro de dépôt: 98402884.5
(22) Date de dépôt: 20.11.1998
(51) Int. Cl.: G01P 3/44, B65D 59/06

(54) **Dispositif de protection d'un codeur magnétique**
Schutzvorrichtung für eine magnetische Kodiereinrichtung
Protection device for a magnetic coder

(30) Priorité: 28.11.1997 FR 9714984
(43) Date de publication de la demande: 02.06.1999
(73) Titulaire: SNR ROULEMENTS, 74010 Annecy Cédex (FR)
(72) Inventeur: Nicot, Christophe, 74330 Epagny (FR)
(74) Mandataire: Srour, Elie

(56) Documents cités:
- EP-A- 0 669 534
- FR-A- 2 700 588
- US-A- 5 010 290
- US-A- 5 642 042

## Description

La présente invention se rapporte à un dispositif de protection d'un codeur magnétique et plus particulièrement à un dispositif de protection d'un codeur magnétique durant son stockage ou son transport, le codeur magnétique étant destiné à coopérer avec un capteur pour mesurer la rotation d'un élément tournant.

Classiquement, les dispositifs pour mesurer la rotation d'un élément tournant comprennent un capteur maintenu immobile par rapport au référentiel de mesure et un codeur magnétique entraîné en rotation par l'élément tournant, le capteur situé au voisinage immédiat du codeur magnétique coopérant avec ce dernier pour fournir un signal à une centrale électronique réalisant le traitement de l'information. Par exemple, le brevet US-A-5 642 042 décrit un dispositif similaire, qui comporte un châssis fixe entourant le codeur magnétique et destiné à assurer la protection de ce dernier pendant les mesures.

Un inconvénient de ce type de dispositif réside dans le fait que la face active du codeur venant en regard du capteur, réalisée par une surface magnétique multipolaire, doit être protégée durant les phases de transport et d'assemblage contre les chocs et les dépôts de particules, en particulier de nature ferromagnétiques.

Le but de la présente invention est donc de proposer un dispositif de protection d'un codeur magnétique qui soit peu encombrant, facile à monter, et qui assure la protection de la face active du codeur magnétique, en particulier lors de son stockage ou de son transport tout en étant simple et économique à réaliser.

L'invention a pour objet un codeur magnétique muni d'un dispositif pour la protection dudit codeur magnétique durant les phases de stockage ou de transport, le codeur magnétique étant destiné à coopérer avec un capteur pour mesurer la rotation d'un élément tournant.

Selon l'invention, le dispositif de protection est caractérisé en ce qu'un élément de protection possédant une forme adaptée pour recouvrir la face active du codeur magnétique est disposé sur le codeur magnétique.

Selon une caractéristique du dispositif selon l'invention, l'élément de protection adhère au codeur magnétique par attraction magnétique.

Selon une autre caractéristique du dispositif selon l'invention, l'épaisseur de l'élément de protection est adaptée pour annuler le champ magnétique résultant sur la face extérieure de l'élément de protection qui n'est pas au contact du codeur magnétique.

Avantageusement, l'élément de protection est réalisé en tôle ferromagnétique.

Selon une autre caractéristique du dispositif objet de l'invention, l'élément de protection est réalisé à partir d'un support métallisé ou chargé de particules ferromagnétiques.

Selon encore une autre caractéristique du dispositif objet de l'invention, l'élément de protection possède un corps de forme annulaire de manière à s'adapter à un codeur magnétique porté par un roulement à capteur d'informations.

Dans un mode de réalisation de l'invention, le corps comporte une patte s'étendant radialement en direction du centre de l'élément de protection de manière à interdire l'insertion d'un élément à travers la bague intérieure du roulement sans le retrait de l'élément de protection.

Cette caractéristique permet d'éviter d'oublier de retirer l'élément de protection avant le montage du codeur magnétique sur un élément tournant.

Dans un autre mode de réalisation de l'invention, le corps annulaire comporte une languette s'étendant radialement vers l'intérieur du roulement et présentant une tête permettant sa préhension par un opérateur, la languette étant adaptée pour être pliée de manière à amener la tête à l'extérieur du corps annulaire, permettant ainsi l'insertion d'un élément tournant à travers le roulement sans le retrait de l'élément de protection, le corps comportant également une fente permettant le retrait de l'élément de protection du codeur magnétique, par traction sur la tête et déformation du corps, une fois l'élément tournant inséré dans le roulement.

Cette caractéristique permet de conserver l'élément de protection sur le codeur magnétique au cours du montage du roulement sur l'élément tournant et lors de la mise en place du capteur en regard du codeur magnétique ce qui empêche tout dépôt de particules lors de ces opérations.

Selon une autre caractéristique du dispositif objet de l'invention, la face extérieure de l'élément de protection qui n'entre pas en contact avec la face active de l'élément codeur, est recouverte d'un adhésif

Cette caractéristique permet de retenir les particules qui se sont déposées sur la face extérieure de l'élément de protection évitant ainsi qu'une particule ne rejoigne le codeur magnétique lors du retrait du dispositif de protection.

On comprendra mieux les buts, aspects et avantages de la présente invention, d'après la description donnée ci-après de différents modes de réalisation de l'invention, présentés à titre d'exemple non limitatif, en se référant aux dessins annexés, dans lesquels :
- la figure 1 est une vue en coupe axiale d'un moyeu de roue de véhicule équipé d'un palier à roulement muni d'un dispositif pour mesurer la rotation comportant un codeur magnétique et un capteur ;
- la figure 2 est une vue de face d'un premier mode de réalisation du dispositif de protection selon l'invention représenté seul et destiné à être appliqué sur le codeur magnétique du roulement de la figure 1;
- la figure 3 est une vue de face du dispositif de protection de la figure 2 lorsque celui-ci est disposé sur le roulement de la figure 1 ;
- la figure 4 est une vue de face d'un second mode de réalisation du dispositif de protection selon l'invention destiné à être appliqué contre le codeur magnétique du roulement de la figure 1;
- la figure 5 est une vue en perspective du dispositif de protection de la figure 4 dans une configuration libérant l'espace pour le passage d'un élément tournant ;
- la figure 6 est une vue en perspective du dispositif de protection de la figure 4 lorsque celui-ci est disposé sur le roulement de la figure 1.

Pour faciliter la lecture des dessins, les éléments similaires portent les mêmes références d'une figure à l'autre.

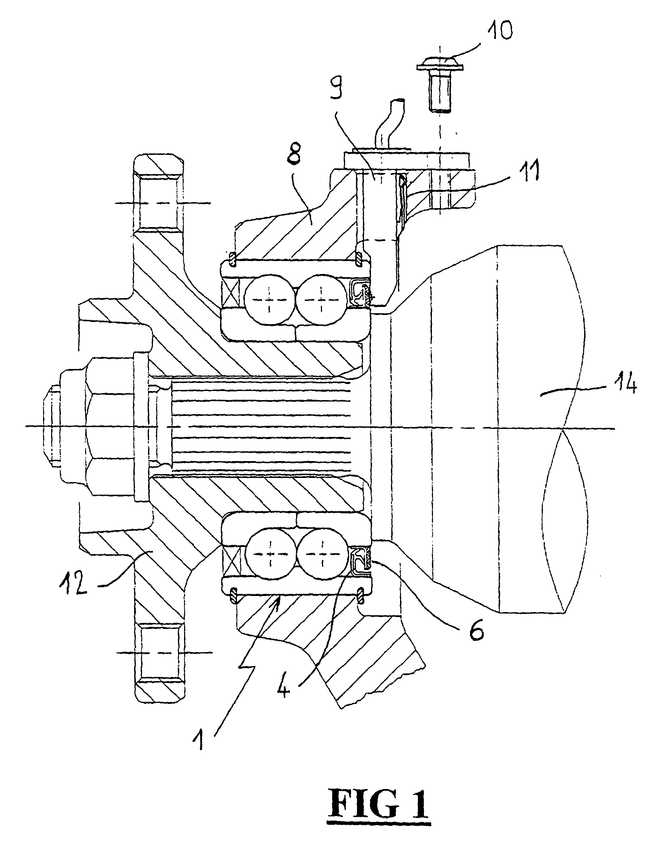

La figure 1 représente un palier à roulement monté dans un moyeu 12 de roue solidaire d'un arbre de transmission 14 par des cannelures internes d'entraînement. Le palier à roulement est constitué par un roulement 1 fretté dans l'alésage d'un porte-fusée 8 fixe et possédant de manière conventionnelle une garniture d'étanchéité 4. Cette garniture d'étanchéité 4, telle que décrite dans la demande de brevet FR-A-9300458 déposée au nom de la demanderesse, possède un codeur magnétique 6 positionné dans le plan de la face latérale du roulement 1.

Le codeur magnétique 6 est constitué d'une armature ferromagnétique sur laquelle est surmoulé un élastomère chargé de particules magnétisées selon une succession de pôles magnétique Nord et Sud.

Le porte-fusée 8 comporte un dispositif capteur de vitesses 9, par exemple à effet hall, fixé au moyen d'une vis 10 dans un logement 11 localisé au voisinage du codeur magnétique 6 et destiné à fournir les informations relatives à la rotation du codeur magnétique 6.

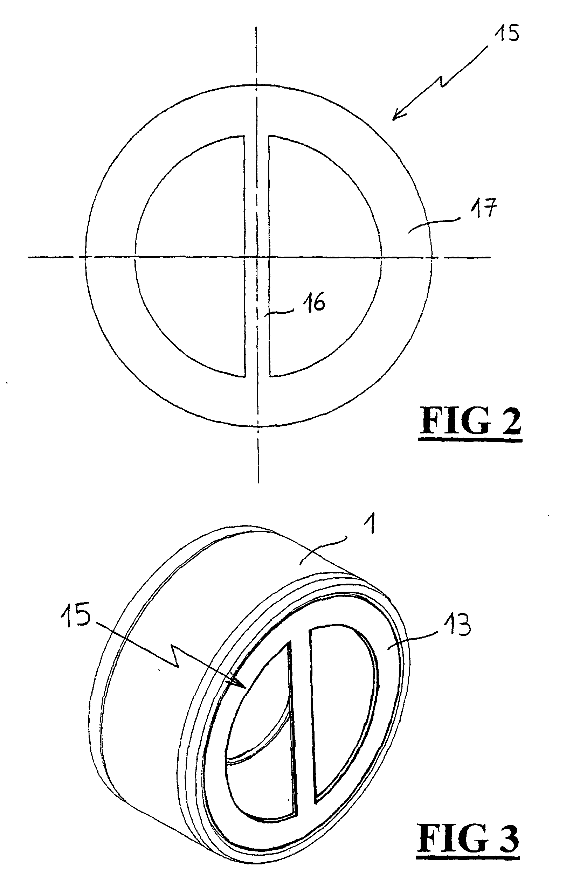

La figure 2 présente un premier mode de réalisation d'un dispositif de protection selon l'invention destiné à protéger le codeur magnétique 6 et en particulier à éviter le dépôt de particules sur la face active du codeur magnétique 6 lors des étapes précédant le montage du roulement 1 selon la figure 1.

Le dispositif de protection est constitué d'un élément de protection 15 possédant un corps 17 de forme annulaire, de diamètre extérieur au plus égal au diamètre extérieur du roulement 1 et de diamètre intérieur au minimum égal au diamètre intérieur du roulement 1, et destiné à être appliqué contre la face active du codeur magnétique 6. L'élément de protection 15 comporte une patte 16 reliant deux points diamétralement opposés du corps annulaire 17 et servant de moyen de préhension de l'élément de protection 15 par un opérateur.

L'élément de protection 15 est avantageusement réalisé en matériau ferromagnétique, tel qu'un acier, de manière à être attiré magnétiquement par le codeur magnétique 6 mais peut également être réalisé à partir d'un support métallisé ou chargé de particules ferromagnétiques.

Un tel dispositif de protection permet par son application sur le codeur magnétique 6, ainsi que cela est montré sur la figure 3, d'empêcher les dépôts de particules contre la face active du codeur magnétique 6 tout en protégeant le codeur magnétique 6 contre les chocs. Par ailleurs, l'épaisseur de l'élément de protection 15 est adaptée pour réduire, voire annuler, le champ magnétique résultant sur la face extérieure 13 de l'élément de protection 15 qui n'est pas au contact du codeur magnétique 6, supprimant ainsi l'attraction générée sur les particules ferromagnétiques présentes dans l'environnement.

L'élément de protection 15 ainsi défini est facilement mis en place par un opérateur sur le codeur magnétique 6 au moment de la fabrication du roulement instrumenté 1 de manière à protéger le codeur magnétique 6 lors des différentes phases de manipulation et de transport du roulement instrumenté 1. L'élément de protection 15 est ensuite retiré du roulement 1, en tirant manuellement sur la patte 16, après l'assemblage du palier à roulement dans le porte fusée 8 et avant l'insertion de l'arbre de transmission 14 à travers le roulement 1. La patte 16 qui facilite la préhension de l'élément de protection 15 sert également d'élément détrompeur, empêchant l'insertion de l'arbre de transmission 14, et évitant ainsi d'oublier d'ôter l'élément de protection 15.

La face extérieure 13 de l'élément de protection 15 peut avantageusement être recouverte d'un adhésif de manière à éviter que les particules attirées magnétiquement contre cette dernière ne se dispersent lors du retrait de l'élément de protection 15 et viennent s'appliquer contre le codeur magnétique 6.

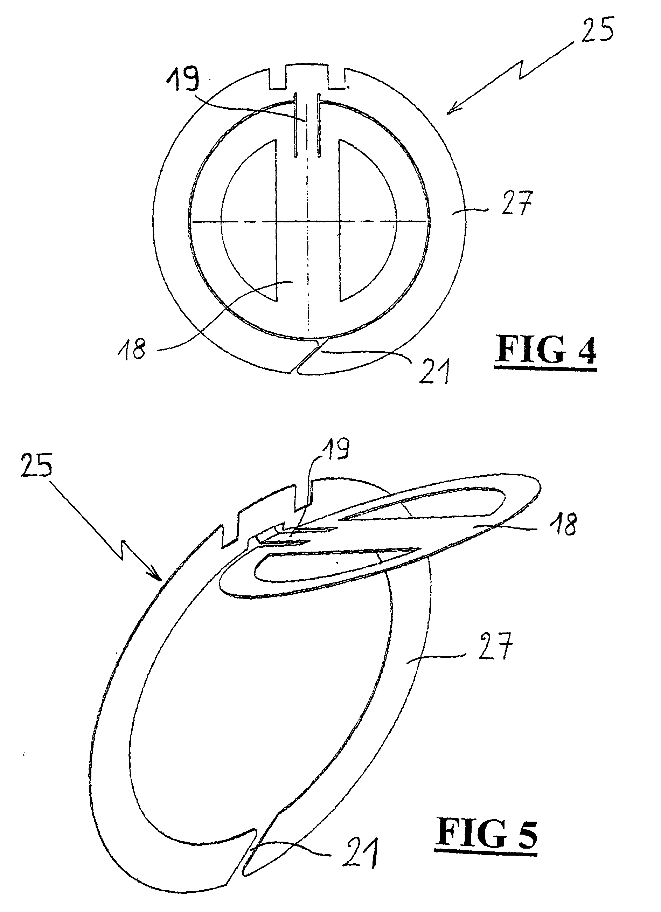

La figure 4 présente une variante de réalisation du dispositif de protection selon l'invention. Le dispositif comprend, de manière similaire au premier mode de réalisation, un élément de protection 25, réalisé en matériau ferromagnétique, constitué d'un corps 27 de forme annulaire, de diamètre extérieur égal au diamètre extérieur de la bague extérieure du roulement 1 et de diamètre intérieur égal au diamètre intérieur du codeur magnétique 6. Le corps annulaire 27 présente une fente 21 oblique et comporte, en position diamétralement opposée, une languette 19 s'étendant radialement en direction du centre de l'élément de protection 25 et présentant une tête circulaire 18 s'insérant dans le diamètre intérieur du corps annulaire 27.

De manière similaire au premier mode de réalisation, un tel élément de protection 25 peut être facilement déposé et maintenu magnétiquement contre la face active du codeur magnétique 6, par exemple lors de la fabrication du roulement instrumenté 1. Cette variante de réalisation présente l'avantage de permettre le maintien de l'élément de protection 25 contre le codeur magnétique 6 lors de l'assemblage du dispositif de mesure représenté à la figure 1. En effet, comme on peut le voir sur la figure 5, la languette 19 de l'élément de protection 25 est adaptée pour pouvoir être pliée par traction sur la tête 18 de manière à libérer l'espace au centre du corps annulaire 27.

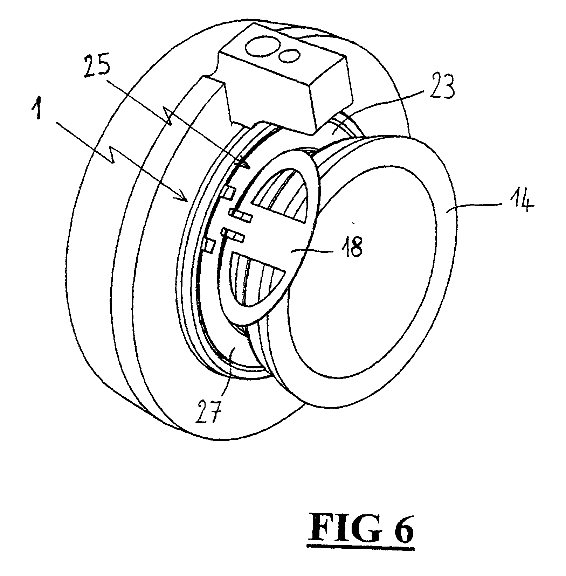

Ainsi, l'assemblage du dispositif de mesure peut être réalisé en laissant l'élément de protection 25 appliqué contre le roulement 1 et en pliant la languette 19 par traction sur la tête 18 en direction de l'extérieur du corps annulaire 27 de manière à permettre l'insertion de l'arbre de transmission 14 à travers le roulement 1 ainsi que cela est représenté sur la figure 6.

L'élément de protection 25 n'est ensuite retiré qu'après l'assemblage complet du dispositif de mesure. En particulier, l'élément de protection 25 est maintenu contre la face active du codeur magnétique 6 lors de la mise en place du capteur 9 dans son logement 11 de façon à éviter qu'un copeau résultant par exemple de l'usinage du logement 11, et libéré lors de l'introduction du capteur 9, ne soit attiré contre le codeur magnétique 6.

Le retrait de l'élément de protection 25 s'effectue simplement, une fois l'ensemble du dispositif de mesure assemblé, en tirant sur la tête 18 suivant une direction radiale de manière à provoquer la déformation du corps annulaire 27 au niveau de la fente 21 jusqu'à permettre le retrait de l'élément de protection 25.

Avantageusement, la face extérieure 23 de l'élément de protection 25 qui n'est pas appliquée contre le codeur magnétique 6 est recouverte d'un adhésif de manière à ce que les particules déposées sur cette face 23 restent collées lors du retrait de l'élément de protection 25 du codeur magnétique 6.

Grâce au dispositif selon l'invention et quelle que soit la variante de réalisation, le codeur magnétique peut être protégé durant les phases de transport et d'assemblage éliminant ainsi les risques de dépôt de particules, telles que des copeaux souvent présents dans les ateliers de montage. Ceci permet par un moyen simple et peu coûteux d'accroître considérablement la précision des dispositifs de mesure.

Bien entendu, l'invention n'est nullement limitée au mode de réalisation décrit et illustré qui n'a été donné qu'à titre d'exemple.

## Revendications

1. Codeur magnétique (6) muni d'un dispositif pour la protection dudit codeur magnétique (6) durant les phases de stockage ou de transport, ledit codeur magnétique (6) étant destiné à coopérer avec un capteur (9) pour mesurer la rotation d'un élément tournant (12), **caractérisé en ce qu'**un élément de protection (15,25) possédant une forme adaptée pour recouvrir la face active dudit codeur magnétique (6) est disposé sur ledit codeur magnétique (6).

2. Codeur magnétique (6) muni d'un dispositif pour la protection dudit codeur magnétique (6) selon la revendication 1, **caractérisé en ce que** ledit élément de protection (15,25) adhère audit codeur magnétique (6) par attraction magnétique.

3. Codeur magnétique (6) muni d'un dispositif pour la protection dudit codeur magnétique (6) selon la revendication 2, **caractérisé en ce que** l'épaisseur de l'élément de protection (15,25) est adaptée pour annuler le champ magnétique résultant sur la face extérieure (13,23) de l'élément de protection (15,25) qui n'est pas au contact du codeur magnétique (6).

4. Codeur magnétique (6) muni d'un dispositif pour la protection dudit codeur magnétique (6) selon l'une quelconque des revendications 2 à 3, **caractérisé en ce que** l'élément de protection (15,25) est réalisé en tôle ferromagnétique.

5. Codeur magnétique (6) muni d'un dispositif de protection dudit codeur magnétique (6) selon quelconque des revendications 2 à 3, **caractérisé en ce que** l'élément de protection (15,25) est réalisé à partir d'un support métallisé ou chargé de particules ferromagnétiques.

6. Codeur magnétique (6) muni d'un dispositif de protection dudit codeur magnétique (6) selon l'une quelconque des revendications 1 à 5, **caractérisé en ce que** l'élément de protection (15,25) possède un corps (17,27) de forme annulaire de manière à s'adapter au dit codeur magnétique (6) pouvant être porté par un roulement (1) à capteur d'information.

7. Codeur magnétif (6) muni d'un dispositif de protection dudit codeur magnétique (6) selon la revendication 6, **caractérisé en ce que** ledit corps (17) comporte une patte (16) s'étendant radialement en direction du centre de l'élément de protection (15) de manière à interdire l'insertion d'un élément à travers la bague intérieure dudit roulement (1) sans le retrait dudit élément de protection (15).

8. Codeur magnétif (6) muni d'un dispositif de protection dudit codeur magnétique (6) selon la revendication 6, **caractérisé en ce que** ledit corps (27) comporte une languette (19) s'étendant radialement vers l'intérieur dudit roulement (1) et présentant une tête (18) permettant sa préhension par un opérateur, ladite languette (19) étant adaptée pour être pliée de manière à amener ladite tête (18) à l'extérieur dudit corps annulaire (27), permettant ainsi l'insertion d'un élément tournant à travers ledit roulement (1) sans le retrait dudit élément de protection (25), ledit corps (27) comportant une fente (21) permettant le retrait dudit élément de protection (25) du codeur magnétique (6), par traction sur la tête (18) et déformation du corps (27), une fois l'élément tournant inséré dans ledit roulement (1).

9. Codeur magnétif (6) muni d'un dispositif de protection dudit codeur magnétique (6) selon l'une quelconque des revendication 1 à 8, **caractérisé en ce que** la face extérieure (13,23) dudit élément de protection (15,25) qui est opposée à la face en contact de la face active de l'élément codeur (6), est recouverte d'un adhésif.

## Patentansprüche

1. Magnetischer Kodierer (6) mit einer Vorrichtung zum Schutz dieses magnetischen Kodierers (6) während der Phasen der Lagerung oder des Transports, wobei der magnetische Kodierer (6) dazu dient, mit einem Fühler (9) zusammenzuwirken um die Drehung eines rotierenden Bauteils (12) zu messen, **dadurch gekennzeichnet, dass** ein Schutzteil (15, 25), das eine geeignete Gestalt aufweist um die aktive Fläche des magnetischen Kodierers (6) zu bedecken, auf den magnetischen Kodierer (6) aufgesetzt ist.

2. Magnetischer Kodierer (6) mit einer Vorrichtung zum Schutz dieses magnetischen Kodierers (6) nach Anspruch 1, **dadurch gekennzeichnet, dass** das Schutzteil (15, 25) am magnetischen Kodierer (6) durch magnetische Anziehung haftet.

3. Magnetischer Kodierer (6) mit einer Vorrichtung zum Schutz dieses magnetischen Kodierers (6) nach Anspruch 2, **dadurch gekennzeichnet, dass** die Dicke des Schutzteils (15, 25) derart gewählt ist, dass das auf der Außenfläche (13, 23) des Schutzteils (15, 25), die nicht mit dem magnetischen Kodierer (6) in Berührung steht, auftretende Magnetfeld annulliert wird.

4. Magnetischer Kodierer (6) mit einer Vorrichtung zum Schutz dieses magnetischen Kodierers (6) nach einem der Ansprüche 2 bis 3, **dadurch gekennzeichnet, dass** das Schutzteil (15, 25) aus einem ferromagnetischen Blech besteht.

5. Magnetischer Kodierer (6) mit einer Vorrichtung zum Schutz dieses magnetischen Kodierers (6) nach einem der Ansprüche 2 bis 3, **dadurch gekennzeichnet, dass** das Schutzteil (15, 25) aus einer Halterung besteht, die metallisiert oder mit ferromagnetischen Teilchen beladen ist.

6. Magnetischer Kodierer (6) mit einer Vorrichtung zum Schutz dieses magnetischen Kodierers (6) nach Ansprüchen 1 bis 5, **dadurch gekennzeichnet, dass** das Schutzteil (15, 25) ein ringförmiges Bauteil (17, 27) aufweist, das an den magnetischen Kodierer (6) angepasst ist, der von einem Lager (1) mit einem Fühler zur Erzeugung von Informationen getragen wird.

7. Magnetischer Kodierer (6) mit einer Vorrichtung zum Schutz dieses magnetischen Kodierers (6) nach Anspruch 6, **dadurch gekennzeichnet, dass** das Bauteil (17) eine Lasche (16) aufweist, die sich radial zur Mitte des Schutzteils (15) hin erstreckt um dadurch das Einsetzen eines den Innenring des Lagers 1 durchsetzenden Bauteils zu verhindern, solange das Schutzteil (15) nicht abgenommen ist.

8. Magnetischer Kodierer (6) mit einer Vorrichtung zum Schutz dieses magnetischen Kodierers (6) nach Anspruch 6, **dadurch gekennzeichnet, dass** das Bauteil (27) eine Lasche (19) aufweist, die sich radial zum Inneren des Lagers (1) hin erstreckt und die ein Kopfteil (18) aufweist, das sein Ergreifen durch eine Bedienungsperson ermöglicht, wobei die Lasche (19) derart ausgebildet ist, dass sie umgebogen werden kann, damit das Kopfteil (18) zum Äußeren des ringförmigen Bauteils (27) bewegt wird und so das Einsetzen eines sich drehenden Teils durch das Lager (1) hindurch ermöglicht wird, ohne dass das Schutzteil (25) abgenommen ist, wobei das Bauteil (27) einen Spalt (21) aufweist zur Abnahme des Schutzteils (25) vom magnetischen Kodierer (6) durch Zugeinwirkung auf das Kopfteil (18) und Verformung des Bauteils (27) nachdem das sich drehende Teil in das Lager (1) eingesetzt worden ist.

9. Magnetischer Kodierer (6) mit einer Vorrichtung zum Schutz dieses magnetischen Kodierers (6) nach einem der Ansprüche 1 bis 8, **dadurch gekennzeichnet, dass** die Außenfläche (13, 23) des Schutzteils (15, 25) , die der Kontaktfläche mit der aktiven Fläche des Kodierers (6) entgegen gesetzt ist, mit einer Klebeschicht versehen ist.

## Claims

1. A magnetic encoder (6) provided with a device for protection of said magnetic encoder (6) during the storage or transport phases, said magnetic encoder (6) being intended to co-operate with a pick-up (9) for measuring the rotation of a rotating element (12), **characterised in that** a protection element (15, 25) of a suitable shape for covering the active face of said magnetic encoder (6) is disposed on said magnetic encoder (6).

2. A magnetic encoder (6) provided with a device for protection of said magnetic encoder (6) according to claim 1 **characterised in that** said protection element (15, 25) adheres to said magnetic encoder (6) by magnetic attraction.

3. A magnetic encoder (6) provided with a device for protection of said magnetic encoder (6) according to claim 2 **characterised in that** the thickness of the protection element (15, 25) is adapted to nullify the magnetic field resulting on an external face (13, 23) of the protection element (15, 25) which is not in contact with the magnetic encoder (6).

4. A magnetic encoder (6) provided with a device for protection of said magnetic encoder (6) according to either one of claims 2 and 3 **characterised in that** the protection element (15, 25) is made of ferromagnetic sheet metal.

5. A magnetic encoder (6) provided with a device for protection of said magnetic encoder (6) according to either one of claims 2 and 3 **characterised in that** the protection element (15, 25) is made from a support which is metallised or filled with ferromagnetic particles.

6. A magnetic encoder (6) provided with a device for protection of said magnetic encoder (6) according to any one of claims 1 to 5 **characterised in that** the protection element (15, 25) has a body (17, 27) of annular shape so as to fit to said magnetic encoder (6) which can be carried by a rolling bearing (1) with an information pick-up.

7. A magnetic encoder (6) provided with a device for protection of said magnetic encoder (6) according to claim 6 **characterised in that** the said body (17) comprises a tongue (16) extending radially in the direction of the centre of the protection element (15) in such a way as to prevent the insertion of an element through the inner race of the rolling bearing (1) without the withdrawal of said protection element (15).

8. A magnetic encoder (6) provided with a device for protection of said magnetic encoder (6) according to claim 6 **characterised in that** said body (27) comprises a tongue portion (19) which extends radially towards the interior of the rolling bearing (1) and which has a head (18) permitting it to be gripped by an operator, said tongue portion (19) being adapted to be bent in such a way as to bring said head (18) to the exterior of said annular body (27), thus permitting the insertion of a rotating element through said rolling bearing (1) without withdrawal of said protection element (25), said body (27) comprising a slot (21) permitting the withdrawal of said protection element (25) from the magnetic encoder (6) by pulling on the head (18) and deformation of the body (27) once the rotating element is inserted into said rolling bearing (1).

9. A magnetic encoder (6) provided with a device for protection of said magnetic encoder (6) according to any one of claims 1 to 8 **characterised in that** the external face (13, 23) of said protection element (15, 25) which is opposite to the face in contact with the adhesive face of the encoder element (6) is covered by an adhesive.
